(19) Europäisches Patentamt

European Patent Office

Office européen des brevets

(11) **EP 0 814 982 B1**

(12) **EUROPÄISCHE PATENTSCHRIFT**

(45) Veröffentlichungstag und Bekanntmachung des Hinweises auf die Patenterteilung:
**23.06.1999 Patentblatt 1999/25**

(21) Anmeldenummer: **96909120.6**

(22) Anmeldetag: **23.03.1996**

(51) Int. Cl.$^6$: **B60T 7/12**, B60T 8/48, B60T 13/72

(86) Internationale Anmeldenummer:
**PCT/EP96/01292**

(87) Internationale Veröffentlichungsnummer:
**WO 96/30239 (03.10.1996 Gazette 1996/44)**

(54) **BREMSANLAGE FÜR KRAFTFAHRZEUGE**

MOTOR VEHICLE BRAKING SYSTEM

SYSTEME DE FREINAGE POUR AUTOMOBILES

(84) Benannte Vertragsstaaten:
**DE ES FR GB**

(30) Priorität: **30.03.1995 DE 19511694**

(43) Veröffentlichungstag der Anmeldung:
**07.01.1998 Patentblatt 1998/02**

(73) Patentinhaber:
**Continental Teves AG & Co. oHG**
**60488 Frankfurt (DE)**

(72) Erfinder: **ECKERT, Alfred**
**D-55294 Bodenheim (DE)**

(56) Entgegenhaltungen:
EP-A- 0 233 360        WO-A-95/03196
DE-A- 2 951 755        DE-A- 4 017 429
US-A- 3 795 426

**Beschreibung**

Die Erfindung betrifft eine Bremsanlage für Kraftfahrzeuge mit einer Betätigungseinheit, die aus einem pneumatischen Bremskraftverstärker sowie einem ihm nachgeschalteten Hauptbremszylinder besteht, an den Radbremsen angeschlossen sind, wobei das Steuerventil des Bremskraftverstärkers unabhängig vom Fahrerwillen mittels eines Elektromagneten ansteuerbar ist, durch dessen Anker einer der Steuerventil-Dichtsitze betätigbar ist, mit einem Bremsdruckregler, dem die in einem ersten Summierer gebildete Regeldifferenz aus einem einem Soll-Bremsdruck entsprechenden Signal und einem einem Ist-Bremsdruck entsprechenden Signal zugeführt und dessen einem Anker-Sollweg entsprechende Ausgangsgröße in einem zweiten Summierer mit einem einem Anker-Istweg entsprechenden Signal verglichen wird, wobei die dem Vergleichsergebnis entsprechende Regeldifferenz einem die Position des Steuerventils beeinflussenden Lageregler zugeführt wird, dessen Ausgangsgröße einem dem Elektromagneten zuzuführenden elektrischen Strom entspricht.

Eine derartige Bremsanlage ist aus der internationalen Patentanmeldung WO 95/03196 bekannt. Die Struktur des vorbekannten Bremsdruckreglers stellt einen Kompromiß zwischen der gewünschten Reglerdynamik und dem Störverhalten des Reglers dar. Wird ein hochdynamisch bzw. sehr schnell arbeitender Regler eingesetzt, so weist dieser eine stufige Charakteristik auf, die unangenehm wirkende Geräusche und Vibrationen im System zur Folge hat. Bei einem langsam arbeitenden Regler müssen größere Ungenauigkeiten bei Wechselvorgängen (Änderungen des Vorzeichens bzw. der Richtung) bezüglich des Sollwertes in Kauf genommen werden.

Es ist daher Aufgabe der vorliegenden Erfindung, Maßnahmen vorzuschlagen, die eine Regelung mit folgenden Eigenschaften ermöglichen:

a) Für Folgeregelung:

- hohe Dynamik
- gleitender, stufenloser Regelvorgang
- schnelles Ansprechverhalten

b) Für Störverhalten, statische Führungsgrößen bzw. Endwertregelung:

- schnelles Ausregeln von Störungen
- keine bleibende Regelabweichung.

Diese Aufgabe wird erfindungsgemäß dadurch gelöst,daß der Bremsdruckregler durch eine Parallelschaltung eines ersten Reglers (Folgeregler), der schnellen zeitlichen Änderungen des dem Soll-Bremsdruck entsprechenden Signals folgt, und eines zweiten Reglers (Endwertregler), der langsamen Änderungen bzw. statischen Wertedes dem Soll-Bremsdruck entsprechenden Signals folgt, gebildet ist, wobei die Ausgangsgrößen der beiden Regler einer situativen Umschaltlogik zugeführt werden, die je nach einem Auswahlkriterium die Ausgangsgröße des ersten oder des zweiten Reglers zum Lageregler durchschaltet.

Vorteilhafte Weiterbildungen des Erfindungsgegenstandes sind in den Unteransprüchen 2 bis 12 aufgeführt.

Weitere Einzelheiten, Merkmale und Vorteile der Erfindung gehen aus der nachfolgenden Beschreibung von zwei Ausführungsbeispielen unter Bezugnahme auf die beiliegende Zeichnung hervor, in der für einander entsprechende Einzelteile gleiche Bezugszeichen verwendet werden.

In der Zeichnung zeigt:

Fig. 1 eine Ausführung der erfindungsgemäßen Bremsanlage in schematischer Darstellung;

Fig. 2 die Steuergruppe des pneumatischen Bremskraftverstärkers nach Fig. 1 im Axialschnitt, teilweise weggebrochen;

Fig. 3 den prinzipiellen Aufbau des Bremsdruckreglers in vereinfachter schematischer Darstellung;

Fig. 4 ein Blockschaltbild einer ersten Ausführung des Bremsdruckreglers nach Fig. 3; und

Fig. 5 ein Blockschaltbild einer zweiten Ausführung des Bremsdruckreglers nach Fig. 3.

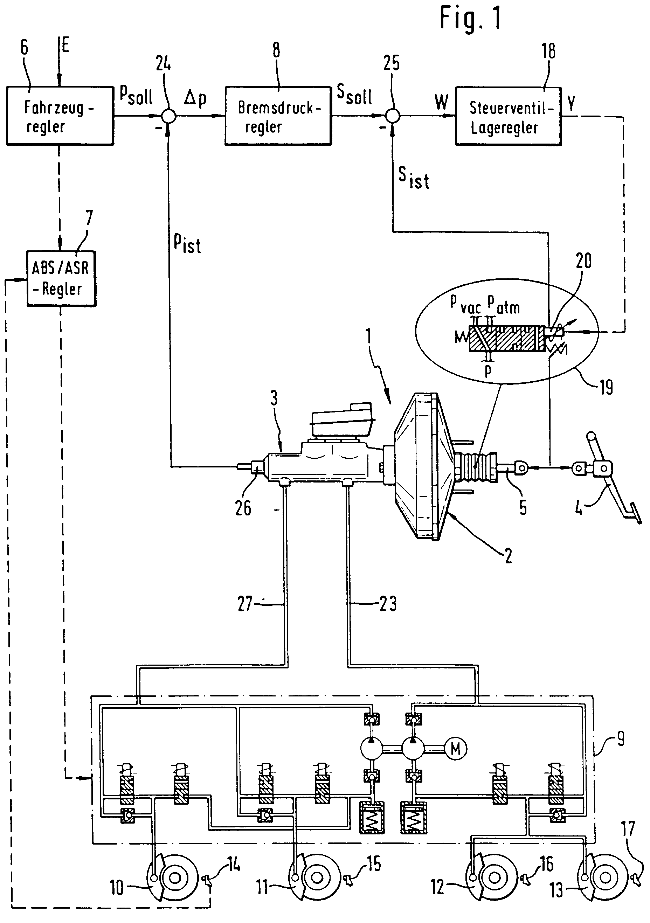

Die in Fig. 1 gezeigte erfindungsgemäße Bremsanlage für Kraftfahrzeuge besteht im wesentlichen aus einer Betätigungseinheit 1, einem elektronischen Fahrzeugregler 6, Radbremsen 10,11,12,13, einem zwischen Radbremsen 10 bis 13 und Betätigungseinheit 1 angeordneten Druckmodulator 9 sowie einem mit dem Fahrzeugregler 6 zusammenwirkenden ABS/ASR-Regler 7, der Steuersignale für den Druckmodulator 9 erzeugt. Jedem der nicht gezeigten Fahrzeugräder ist je ein Radsensor 14,15,16,17, zugeordnet, dessen der Radgeschwindigkeit entsprechendes Steuersignal dem ABS/ASR-Regler 7 zugeführt wird. Die Betätigungseinheit 1 besteht ihrerseits aus einem mittels eines Betätigungspedals 4 betätigbaren pneumatischen Bremskraftverstärker, vorzugsweise einem UnterdruckBremskraftverstärker 2, dem ein Hauptbremszylinder 3, vorzugsweise ein Tandemhauptzylinder, nachgeschaltet ist, dessen nicht gezeigte Druckräume über hydraulische Leitungen 23,27 mit dem Druckmodulator 9 in Verbindung stehen. An das Betätigungspedal 4 ist eine Betätigungsstange 5 angekoppelt, die eine Betätigung eines lediglich schematisch dargestellten Steuerventils 19 ermöglicht, das den Aufbau eines pneumatischen Differenzdruckes im Gehäuse des Unterdruck-Bremskraftverstärkers 2 steuert. Ein Elektromagnet 20 ermöglicht dabei eine Fremdbetätigung des Steuerventils 19.

Wie der Fig. 1 weiter zu entnehmen ist, ist dem Fahrzeugregler 6 ein zweiter elektronischer Regler (Bremsdruckregler) 8 nachgeschaltet, dem eine in einem ersten Summierer 24 gebildete Regeldifferenz p zwischen einem aufgrund eines beispielsweise von einem Abstandssensor gelieferten Eingangssignals E vom Fahrzeugregler 6 erzeugten Soll-Bremsdrucksignal $p_{soll}$ und einem ein Ist-Bremsdrucksignal $p_{ist}$, das von der Betätigungseinheit 1 bzw. einem den im Hauptbremszylinder 3 herrschenden Druck erfassenden Drucksensor 26 geliefert wird. Das Ausgangssignal $S_{AW}$ des Bremsdruckreglers 8 entspricht der gewünschten einzustellenden Lage bzw. Position des Ankers des das Steuerventil 19 betätigenden Elektromagneten 20. Vom Ankerposition-Sollwert $S_{soll}$ wird in einem zweiten Summierer 25 ein am Steuerventil 19, beispielsweise mittels eines nicht gezeigten Wegsensors, ermittelbarer Steuerventilposition-Istwert $s_{ist}$ subtrahiert und die so entstehende Regeldifferenz W wird einem unterlagerten dritten Regler (Steuerventil-Lageregler (18)) zugeführt, dessen Stellgröße Y der Ansteuerung des Elektromagneten 20 dient.

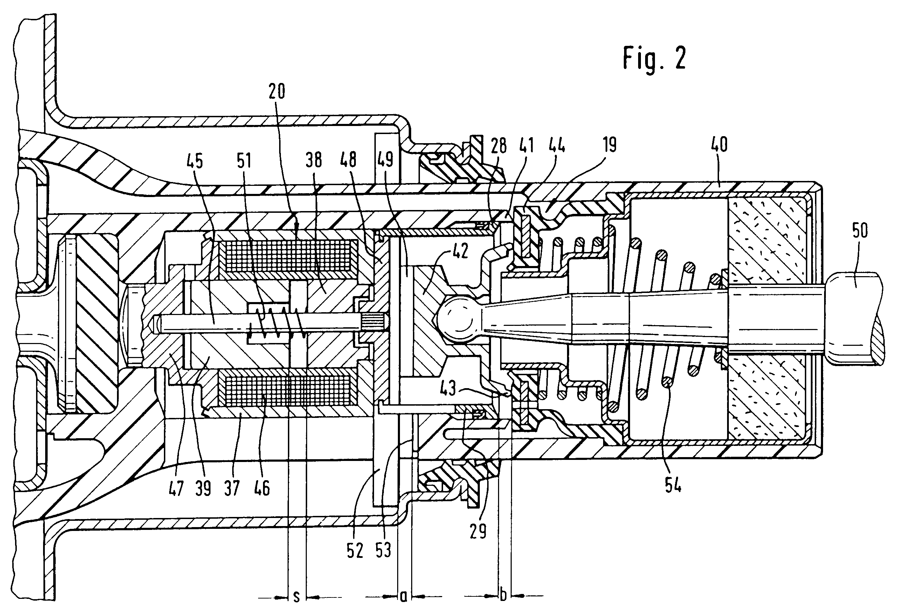

Wie insbesondere Fig. 2 zeigt, ist das Steuerventil 19 in einer im Gehäuse des Bremskraftverstärkers 2 abgedichtet geführten Steuergehäuse 40 untergebracht und besteht aus einem am Steuergehäuse 40 ausgebildeten ersten Dichtsitz 41, einem an einem mit der Betätigungsstange 5 verbundenen Ventilkolben 42 ausgebildeten zweiten Dichtsitz 43 sowie einer mit beiden Dichtsitzen 41,43 zusammenwirkenden Ventilkörper 44.

Um eine von der Betätigungsstange 5 unabhängige Fremdbetätigung des Bremskraftverstärkers 2 einzuleiten, ist radial zwischen dem ersten (41) und dem zweiten Dichtsitz 43 ein dritter Dichtsitz 28 vorgesehen, der mittels des Elektromagneten 20 betätigbar ist, der vorzugsweise in einem durch eine axiale topfförmige Verlängerung des Ventilkolbens 42 gebildeten Gehäuse 37 angeordnet und demnach zusammen mit dem Ventilkolben 42 im Steuergehäuse 40 verschiebbar ist.

Der Elektromagnet 20 besteht aus einer auf einem innerhalb des Gehäuses 37 befestigten Führungsteil 38 aufgesteckten Spule 46 sowie einem darin verschiebbar angeordneten zylindrischen Anker 39, der mit einem Stift 45 unlösbar verbunden ist, der einerseits im Führungsteil 38 und andererseits in einem das Gehäuse 37 verschließenden Verschlußteil 47 geführt wird. Eine dem Anker 39 am Führungsteil 38 axial gegenüberliegend ausgebildete Polfläche kann dabei vorzugsweise als Außenkonus ausgeführt sein, um eine Linearisierung der Kraft-Weg-Charakteristik des Elektromagneten 20 zu erreichen. An seinem der Betätigungsstange 5 zugewandten Ende trägt der Stift 45 eine Kraftübertragungsplatte 48, die vorzugsweise rechteckig ausgebildet und in einer Radialnut 49 des Ventilkolbens 42 angeordnet ist und die eine Übertagung der vom Elektromagneten 20 aufgebrachten Fremdbetätigungskraft auf den dritten Dichtsitz 28 ermöglicht. Der dritte Dichtsitz 28 ist zu diesem Zweck an einer im Steuergehäuse 40 abgedichtet geführten Hülse 29 ausgebildet, die mit der Kraftübertragungsplatte 48 verbunden ist. Zwischen dem teilweise in das Verschlußteil 47 hineinragenden Anker 39 und dem Führungsteil 38 ist eine Druckfeder 51 angeordnet, die den Anker 39 in seiner Ausgangslage hält, in der der dritte Dichtsitz 28 gegenüber dem am Ventilkolben 42 ausgebildeten zweiten Dichtsitz 43 axial versetzt (s. Abstand b) angeordnet ist.

Bei einer durch Bestromen der Spule 46 eingeleiteten Fremdbremsung wird der Anker 39 entgegen der Kraft der Druckfeder 51 in der Zeichnung nach rechts verschoben, wodurch der dritte Dichtsitz 28 zunächst nach Überbrückung des Abstandes "b" an der Dichtfläche des Ventilkörpers 44 zur Anlage kommt. Durch diese Anlage wird der am Steuergehäuse 40 ausgebildete erste Dichtsitz 41 wirkungsmäßig überbrückt, so daß keine Verbindung zwischen den nicht gezeigten pneumatischen Kammern des Bremskraftverstärkers 2 mehr besteht. Anschließend bewegen sich der dritte Dichtsitz 28 und der Ventilkörper 44 zusammen weiter, wobei der zweite Dichtsitz 43 geöffnet und die belüftbare Kammer des Bremskraftverstärkers 2 belüftet wird. Die Bewegung des dritten Dichtsitzes 28 dauert so lange, bis der Anker 39 am Führungsteil 38 anschlägt und der Spalt I's" zwischen den beiden Teilen zu Null wird. Bei fehlender Betätigungskraft an der Betätigungsstange 5 läuft das Steuergehäuse 40 relativ zum Ventilkolben 42 um einen Weg vor, der dem Abstand "a" zwischen einem die Bewegung des Ventilkolbens 42 begrenzenden Querglied 52 und einer am Steuergehäuse 40 ausgebildeten Anschlagfläche 53 entspricht. Ursache hierfür ist eine Kolbenstangenrückholfeder 54, die über die Betätigungsstange 5 den Ventilkolben 42 nach rechts bewegt und versucht, den zweiten Dichtsitz 43 wieder zu schließen. Da sich aber der dritte Dichtsitz 28 aufgrund der festen Verbindung von Elektromagnet 20 und Ventilkolben 42 synchron mitbewegt, wird der Spalt zwischen dem Ventilkörper 44 und dem zweiten Dichtsitz 43 offengehalten, und zwar um das Maß s-b. Hierdurch wird die belüftbare Kammer des Bremskraftverstärkens 2 mit der Atmosphäre verbunden und es wird eine Bremskraft erzeugt.

Nach einem Ausschalten des Elektromagneten 20 bewegt sich der Anker 39 mit dem dritten Dichtsitz 28 unter der Wirkung der Feder 51 nach links, wodurch der dritte Dichtsitz 28 geöffnet wird, während der Ventilkörper 44 den zweiten Dichtsitz 43 schließt. Da der erste Dichtsitz 41 - wie oben erwähnt - weiterhin offenbleibt, wird über die offene Verbindung zwischen den pneumatischen Kammern aus der belüftbaren Kammer die Atmosphäre abgesaugt, so daß der im Hauptbremszylinder 3 herrschende Druck abgebaut wird.

Über den offenen ersten Dichtsitz 41 wird die belüftbare Kammer solange entlüftet, bis die Steuergruppe in ihre Ausgangslage zurückkehrt und das Querglied 52 am Gehäuse des Bremskraftverstärkers 2 anschlägt. Das Steuergehäuse 40 kann sich solange bewegen, bis es auf der in der Zeichnung linken Seite des Querglieds 52 zur Anlage kommt und der erste Dichtsitz 41 geschlossen wird. Das Gerät ist dann in Lösestellung.

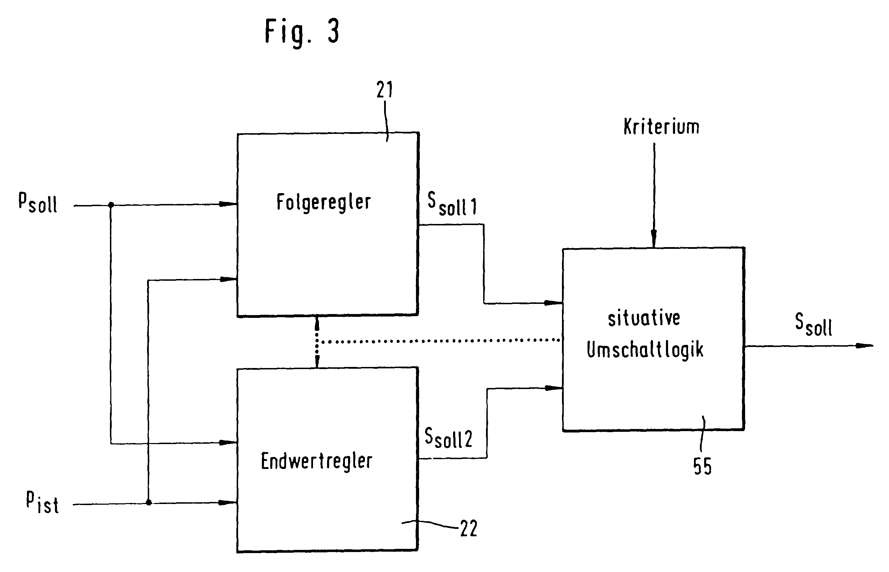

Der in Fig. 3 dargestellte prinzipielle Aufbau des erfindungsgemäßen Bremsdruckreglers 8 läßt erkennen, daß er durch eine Parallelschaltung eines ersten bzw. Folgereglers 21 sowie eines zweiten bzw. Endwertreglers 22 gebildet ist, der eine situative Umschaltlogik 55 nachgeschaltet ist. Beide Regler 21, 22 erfüllen jeweils die gestellten Anforderungen, besitzen aber Schwächen in der komplementären Anforderung. Diese Schwächen werden durch die situative Umschaltlogik 55 kompensiert, die je nach festgestellter Regelungssituation bzw. einem später erläuterten Kriterium die Ausgangsgröße $S_{soll1}$ des Folgereglers 21 oder die Ausgangsgröße $S_{soll2}$ des Endwertreglers 22 zum unterlagerten Lageregler 18 durchschaltet. Somit kommt bei dynamischen Führungsgrößenänderungen der Folgeregler 21 und bei sehr langsamen bzw. statischen Sollwertänderungen der Endwertregler 22 in den Regelkreis.

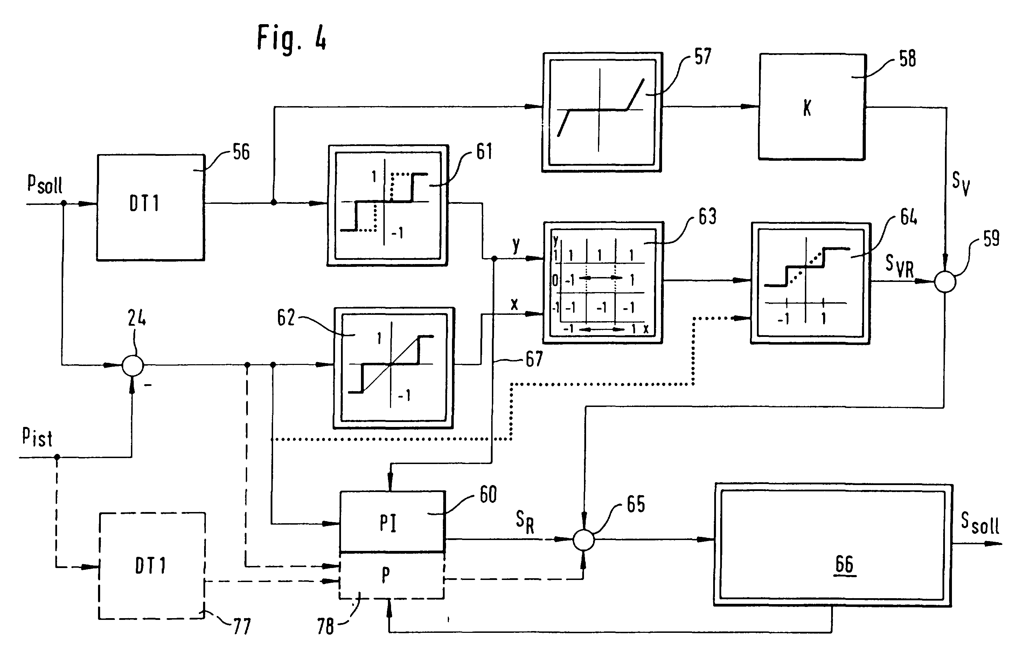

Die in Fig. 4 dargestellte Regelstruktur besteht im wesentlichen aus einem Position-Vorsteuerzweig 56, 57 und 58, der vorhin erwähnten situativen Umschaltlogik 61, 62 und 63, einem nichtlinearen Übertragungsglied 64 mit einer Dreipunkt-Kennlinie, einem proportional - integrierenden (PI-) Regler 60 sowie einer Beschränkungslogik 66.

Der Position-Vosteuerzweig besteht seinerseits aus einem differenzierenden (DT1-) Filter 56, dem als Eingangsgröße das dem Soll-Bremsdruckwert entsprechende Signal $P_{soll}$ zugeführt wird, einer Totzone 57, die lediglich die Werte des im DT1-Filter 56 gebildeten filtrierten Solldruckgradienten $\dot{p}_{soll}$ durchschaltet, die eine bestimmte Schwelle unter- bzw. überschreiten, sowie einem Verstärker 58, dessen Ausgangsgröße $S_V$ einem Summierer 59 zugeführt wird.

Die Umschaltlogik wird durch ein Dreipunktglied 61, u.U. mit einer Hysterese, zur Erkennung des Vorzeichens des Soll-Bremsdruckgradienten $\dot{p}_{soll}$, eine Begrenzung 62 mit einer zusätzlichen Verstärkung zur Normierung der im ersten Summierer 24 gebildeten Regeldifferenz $\Delta p$, sowie ein Kennfeld 63 gebildet, dem als Eingangsgrößen die Ausgangssignale y,x der Funktionsblöcke 61 und 62 zugeführt werden, die als Koordinaten zur Auswahl eines Wertes verwendet werden, der dem nichtlinearen Übertragungsglied 64 zugeführt wird, dessen drei Zustände (-1,0,1) einem Druckauf- bzw. -abbau sowie einer Druckhaltephase entsprechen. Die Ausgangsgröße $S_{VR}$ des nichtlinearen Übertragungsglieds 64 wird im Summierer 59 zur Ausgangsgröße $S_V$ der Vorsteuerung hinzuaddiert, wobei das Additionsergebnis in einem dritten Summierer 65 zur Ausgangsgröße $S_R$ des PI-Reglers 60 hinzuaddiert wird und anschließend auf realisierbare Werte in einer Beschränkungslogik 66 beschränkt wird, die gleichzeitig den I-Anteil des PI-Reglers 60 kontrolliert. Der vorhin erwähnte Folgeregler 21 besteht demnach im wesentlichen aus dem Vorsteuerzweig 56, 57, 58, dem nichtlinearen Übertragungsglied 64 sowie dem PI-Regler 60, während der Endwertregler 22 durch die Kombination der Begrenzung 62 mit dem Kennfeld 63, dem nichtlinearen Übertragungsglied 64 sowie dem PI-Regler 60 gebildet ist.

Für die nachfolgende Beschreibung der Funktion des in Fig. 4 dargestellten Bremsdruckreglers wird angenommen, daß dem Vorsteuerzweig eine positive gleichförmige Sollwertänderung (Rampe) als Eingangsgröße zugeführt wird, so daß am Ausgang des differenzierenden (DT1-) Filters 56 idealisiert ein Rechtecksignal erscheint. Ist der Wert des Rechtecksignals größer als die durch die Totzone 57 vorgegebene Schwelle, so erscheint an ihrem Ausgang wieder ein Rechtecksignal, das nach einer Verstärkung mit einem Faktor K als erstes Sollwegsignal $S_V$ dem Summierer 59 zugeführt wird. Das Ausgangssignal des (DT1-) Filters 56 wird gleichzeitig dem u. U. eine Hysterese aufweisenden Dreipunktglied 61 zugeführt, dessen Ausgangsgröße y unter der Voraussetzung, daß der Wert des erwähnten Signals die durch das Dreipunktglied 61 vorgegebene Schaltschwelle überschreitet, den Wert einer "1" annimmt, die als entsprechende Koordinate für das Kennfeld 63 dient. Wie dem Inhalt des Kennfeldes 63 zu entnehmen ist, erscheint am Ausgang des Kennfeldes 63 ein einer "1" entsprechendes Signal $y_a$, und zwar unabhängig von der Größe der anderen Koordinate x, die von der Begrenzung 62 geliefert wird und in diesem Fall für das Kennfeld 63 unwirksam bleibt. Aus dem Inhalt des Kennfeldes 63 ist weiter ersichtlich, daß die aus der begrenzten Regeldifferenz entstehende Koordinate x nur dann wirksam werden kann, wenn die erstgenannte Koordinate y = 0 ist. Auf Grund des geschilderten Vorgangs erscheint dann am Ausgang des Übertragungsgliedes 64 ein Signal $S_{VR}$, das einen Ankerweg repräsentiert, der für den Druckaufbau erforderlich ist. Dieses Signal wird dann im Summierer 59 zu dem vorhin erwähnten Ausgangssignal der Vorsteuerung $S_V$ hinzuaddiert.

Für die Beschreibung der Regelung wird angenommen, daß vor dem Beginn der Sollwertänderung die Regeldifferenz $\Delta p = 0$ war. Bei der vorhin beschriebenen Sollwertänderung entsteht eine positive Regeldifferenz $\Delta p > 0$, die im PI-Regler 60 verstärkt und solange aufintegriert wird, bis wieder $\Delta p = 0$ geworden ist. Die Begrenzung 62 bleibt unwirksam, solange y = 1 bleibt. Die Ausgangsgröße $S_R$ wird in einem weiteren Summierer 65 zu dem Ergebnis der im Summierer 59 durchgeführten Addition hinzuaddiert, wobei das Additionsergebnis einer Beschränkungslogik 66 zugeführt wird, deren Ausgangsgröße $S_{soll}$ dem gewünschten Ankerweg entspricht und die außerdem den I-Anteil des PI-Reglers 60 kontrolliert bzw. beschränkt. Wie der Zeichnung weiter zu entnehmen ist, kann zusätzlich zum PI-Reglers 60 ein P-Regler 78 zum Einsatz kommen, dem ein zweites differenzierendes (DT1-) Filter 77 vorgeschaltet ist.

Bei kleinen Solldruckgradienten erscheint am Ausgang des Dreipunktgliedes 61 ein Wert y = 0, so daß die Ausgangsgröße des Kennfeldes 63 dem Wert der anderen Koordinate x entspricht und somit in Block 64 ein Wert entsprechend x zwischen Druckabbau- und Druckaufbauposition ausgegeben wird. Da die Totzone 57 keine kleinen Sollwertänderungen durchläßt, hat die Vorsteuerung auf den Regelvorgang keinen Einfluß. Der in Fig. 4 mit dem Bezugszeichen 67 bezeichnete Signalweg zeigt an, daß die Parameter des PI-Reglers 60 duzch die situative Umschaltlogik 61, 62, 63 beeinflußt bzw. geändert werden können.

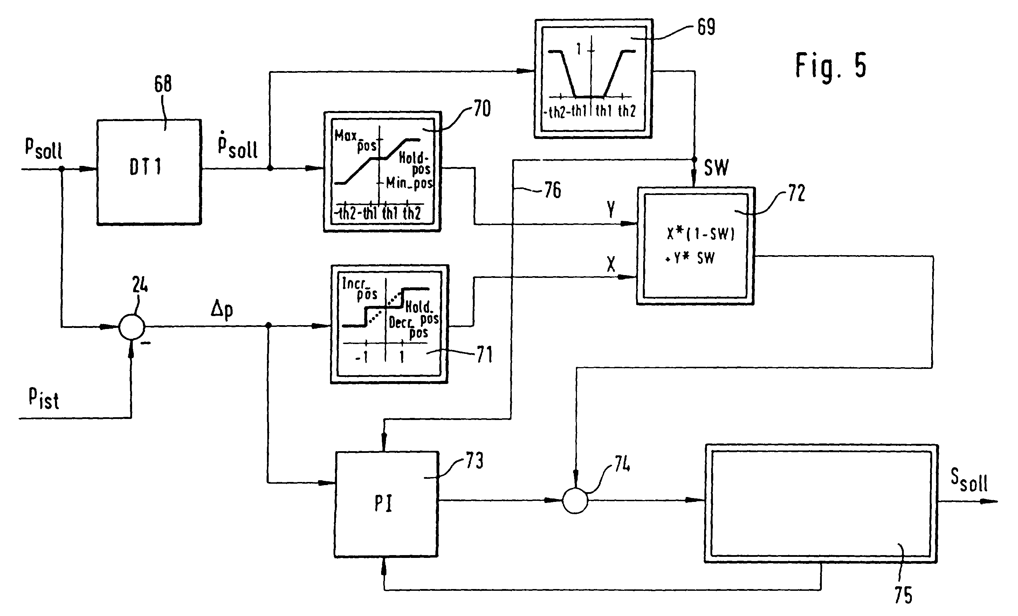

Die in Fig. 5 dargestellte Regelstruktur besteht im wesentlichen aus einem differenzierenden (DT1-) Filter 68, einer Signalaufbereitung 69, einer Vorsteuerung 70, einem nichtlinearen Regler 71 mit einer Dreipunkt-Kennlinie, einer Gewichtung 72 sowie einem PI-Regler 73 mit einer nachgeschalteten Beschränkungslogik 75. Wie bei dem in Fig. 4 gezeigten Ausführungsbeispiel kann zusätzlich zum PI-Regler 73 ein nicht gezeigter P-Regler verwendet werden, dem ein differenzierendes (DT1-) Filter vorgeschaltet ist.

Das den Soll-Bremsdruckgradienten $\dot{p}_{soll}$ repräsentierende Ausgangssignal des DT1-Filters 68 wird einerseits als Eingangsgröße der Signalaufbereitung 69 und andererseits der Vorsteuerung 70 zugeführt. Die im vorhin erwähnten Summierer 24 entstehende Regeldifferenz Δp dient als Eingangsgröße einerseits dem nichtlinearen Regler 71 und andererseits dem PI-Regler 73. Die Signalaufbereitung 69 erzeugt in Abhängigkeit von einer darin abgelegten Kennlinie ein Steuersignal SW für die Gewichtung 72, der als Eingangsgrößen die Ausgangssignale Y, X der Vorsteuerung 70 sowie des nichtlinearen Reglers 71 zugeführt werden und deren Ausgangsgröße einer Kombination der Ausgangssignale entspricht, die nach der Formel

$$X*(1-SW) + Y*SW$$

gebildet wird. Das Ausgangssignal Y der Vorsteuerung 70 wird dem vom DT1-Filter 68 gelieferten Soll-Bremsdruckgradienten $\dot{p}_{soll}$ zugeordnet, während das Ausgangssignal X durch die Verarbeitung der Regeldifferenz Δp im nichtlinearen Regler bzw. modifizierten Dreipunktschalter 71 entsteht.

Erscheint am Ausgang des DT1-Filters 68 ein kleiner Wert des Soll-Bremsdruckgradienten $\dot{p}_{soll}$, der dem Bereich von -th1 bis +th1 der in der Signalaufbereitung 69 abgelegten Kennlinie entspricht, so erzeugt diese ein Steuersignal SW = 0, so daß die Ausgangsgröße der Gewichtung 72 der Ausgangsgröße X des modifizierten Dreipunktschalters 71 entspricht, die im zweiten Summierer 74 zu der Ausgangsgröße des PI-Reglers 73 hinzuaddiert wird, wobei das Additionserbebnis wie im ersten Beispiel der Beschränkungslogik 75 zugeführt wird.

Bei Sollwertänderungen, die größer als +th1 sind, erscheint am Ausgang der Signalaufbereitung 69 ein Steuersignal SW > 0, so daß am Ausgang der Gewichtung 72 eine Kombination von entsprechend gewichteten Signalen Y und X erscheint. In diesem Fall nimmt der Y-Anteil zu und der X-Anteil ab. Somit wird ein gleitendes Wechseln zwischen den Regelmodi erreicht.

Der in Fig. 5 mit dem Bezugszeichen 76 bezeichnete Signalweg zeigt an, daß die Parameter des PI-Reglers 73 durch die Signalaufbereitung 69 beeinflußt bzw. geändert werden können.

Der vorhin erwähnte Folgeregler 21 besteht demnach im wesentlichen aus dem differenzierenden (DT1-) Filter 68, der Vorsteuerung 70, der die eingangs erwähnte Umschaltlogik 55 bildenden Gewichtung 72 sowie dem parallel dazu geschalteten PI-Regler 73, während der Endwertregler 22 durch die Kombination des nicht linearen Reglers 71 mit der Gewichtung 72 sowie dem PI-Regler 73 gebildet ist.

Denkbar ist auch eine weitere Ausführung, bei der die Gewichtung 72 Elemente der unscharfen (Fuzzy-) Logik mit entsprechenden Regeln aufweist. Durch diese Maßnahme würde ein nichtlinear gleitendes Wechseln zwischen den Regelmodi als Funktion von Solldruck, -gradient, Regeldifferenz und - gradient erreicht.

Bezugszeichenliste

| 1 | Betätigungseinheit |
|---|---|
| 2 | Bremskraftverstärker |
| 3 | Hauptbremszylinder |
| 4 | Betätigungspedal |
| 5 | Betätigungsstange |
| 6 | Fahrzeugregler |
| 7 | ABS/ASR-Regler |
| 8 | Bremsdruckregler |
| 9 | Druckmodulator |
| 10 | Radbremse |
| 11 | Radbremse |
| 12 | Radbremse |
| 13 | Radbremse |
| 14 | Radsensor |
| 15 | Radsensor |
| 16 | Radsensor |
| 17 | Radsensor |
| 18 | Lageregler |
| 19 | Steuerventil |
| 20 | Elektromagnet |
| 21 | Folgeregler |
| 22 | Endwertregler |
| 23 | Leitung |
| 24 | Summierer |

| 25 | Summierer |
| 26 | Drucksensor |
| 27 | Leitung |
| 28 | Dichtsitz |
| 29 | Hülse |
| 30 | Summierer |
| 31 | Differenzierer |
| 32 | P-Glied |
| 33 | Komparator |
| 34 | Endstufe |
| 35 | Differenzierer |
| 36 | P-Glied |
| 37 | Gehäuse |
| 38 | Führungsteil |
| 39 | Anker |
| 40 | Steuergehäuse |
| 41 | Dichtsitz |
| 42 | Ventilkolben |
| 43 | Dichtsitz |
| 44 | Ventilkörper |
| 45 | Stift |
| 46 | Spule |
| 47 | Verschlußteil |
| 48 | Kraftübertragungsplatte |
| 49 | Radialnut |
| 50 | Summierer |
| 51 | Feder |
| 52 | Querglied |
| 53 | Anschlagfläche |
| 54 | Kolbenstangenrückholfeder |
| 55 | Umschaltlogik |
| 56 | Filter |
| 57 | Totzone |
| 58 | Verstärker |
| 59 | Summierer |
| 60 | PI-Regler |
| 61 | Dreipunktregler |
| 62 | Begrenzung |
| 63 | Kennfeld |
| 64 | Übertragungsglied |
| 65 | Summierer |
| 66 | Beschränkungslogik |
| 67 | Signalweg |
| 68 | Filter |
| 69 | Signalaufbereitung |
| 70 | Vorsteuerung |
| 71 | Regler |
| 72 | Gewichtung |
| 73 | PI-Regler |
| 74 | Summierer |
| 75 | Beschränkungslogik |
| 76 | Signalweg |
| 77 | Filter |
| 78 | P-Regler |

**Patentansprüche**

1. Bremsanlage für Kraftfahrzeuge mit einer Betätigungseinheit (1), die aus einem pneumatischen Bremskraftverstärker (2) sowie einem ihm nachgeschalteten Hauptbremszylinder (3) besteht, an den Radbremsen (10-13) angeschlossen sind, wobei das Steuerventil (19) des Bremskraftverstärkers (2) unabhängig vom Fahrerwillen mittels eines Elektromagneten (20) ansteuerbar ist, durch dessen Anker (39) einer der Steuerventil-Dichtsitze (28,41,43) betätigbar ist, mit einem Bremsdruckregler (8), dem die in einem ersten Summierer (24) gebildete Regeldifferenz ($\Delta$p) aus einem einem Soll-Bremsdruck entsprechenden Signal ($p_{soll}$) einem einem Ist-Bremsdruck entsprechenden Signal ($P_{ist}$) zugeführt und dessen einem Anker-Sollweg entsprechende Ausgangsgröße ($S_{soll}$) in einem zweiten Summierer (25) mit einem einem Anker-Istweg entsprechenden Signal ($S_{ist}$) verglichen wird, wobei die dem Vergleichsergebnis entsprechende Regeldifferenz (W) einem die Position des Steuerventils beeinflussenden Lageregler (18) zugeführt wird, dessen Ausgangsgröße (Y) einem dem Elektromagneten (20) zuzuführenden elektrischen Strom entspricht, dadurch gekennzeichnet, daß der Bremsdruckregler (8) durch eine Parallelschaltung eines ersten Reglers ( 21), der schnellen zeitlichen Änderungen des dem Soll-Bremsdruck ($P_{soll}$) entsprechenden Signals folgt, und eines zweiten Reglers ( 22), der langsamen Änderungen bzw. statischen Werten des dem Soll-Bremsdruck ($\dot{p}_{soll}$) entsprechenden Signals folgt, gebildet ist, wobei die Ausgangsgrößen ($S_{soll1}$,$S_{soll2}$) der beiden Regler (21,22) einer situativen Umschaltlogik (55) zugeführt werden, die je nach einem Auswahlkriterium die Ausgangsgröße des ersten (21) oder des zweiten Reglers (22) zum Lageregler (18) durchschaltet.

2. Bremsanlage für Kraftfahrzeuge nach Anspruch 1 dadurch geknnzeichnet, daß der Folgeregler (21) aus einem den Soll-Bremsdruckgradienten ( $\dot{p}_{soll}$) verarbeitenden Vorsteuerzweig (56, 57, 58) , einem durch die Ausgangsgröße der Umschaltlogik (61, 62, 63) ansteuerbaren, nichtlinearen Übertragungsglied (64) mit einer Dreipunkt-Kennlinie sowie einem proportionalintegrierenden (PI-) Regler (60) besteht, wobei die Ausgangsgröße ($S_V$) des Vorsteuerzweiges zur Ausgangsgröße ($S_{VR}$) des nichtlinearen Übertragungsgliedes (64) hinzuaddiert wird und das Additionsergebnis zur Ausgangsgröße ($S_R$) des PI-Reglers (60) hinzuaddiert wird, während der Endwertregler (22) durch eine Kombination einer Begrenzung (62) mit einer zusätzlichen Verstärkung zur Normierung der Regeldifferenz ($\Delta$p), mit dem nicht linearen Übertragungsglied (64) sowie dem PI-Regler (60) gebildet ist.

3. Bremsanlage für Kraftfahrzeuge nach Anspruch 2, dadurch gekennzeichnet, daß die Summe der Ausgangsgrößen ($S_V$, $S_{VR}$, $S_R$) des Vorsteuerzweiges (56, 57, 58), des nichtlinearen Übertragungsgliedes (64) und des PI-Reglers (60) einer Beschränkungslogik (66) zugeführt wird, die sie auf einen realisierbaren Wert begrenzt und den I-Anteil des PI-Reglers (60) kontrolliert.

4. Bremsanlage für Kraftfahrzeuge nach Anspruch 2 oder 3, dadurch gekennzeichnet, daß die Umschaltlogik (55 bzw. 61, 62, 63) aus einem Dreipunktglied (61) zur Erkennung des Vorzeichens des Soll-Bremsdruckgradienten ($\dot{p}_{soll}$), der Begrenzung (62) sowie einem Kennfeld (63) besteht, dessen Koordinaten durch die Ausgangsgrößen (y,x) des Dreipunktgliedes (61) sowie der Begrenzung (62) gebildet sind und durch dessen Ausgangsgröße das nichtlineare Übertragungsglied (64) ansteuerbar ist.

5. Bremsanlage für Kraftfahrzeuge nach Anspruch 4, dadurch gekennzeichnet, daß das Dreipunktglied (61) eine Hysterese aufweist.

6. Bremsanlage für Kraftfahrzeuge nach einem der Ansprüche 2 bis 5, dadurch gekennzeichnet, daß der Vorsteuerzweig (56, 57, 58) aus einem differenzierenden (DT1-) Filter (56), einer Totzone (57) sowie einem der Totzone (57) nachgeschalteten Verstärker (58) besteht.

7. Bremsanlage für Kraftfahrzeuge nach einem der Ansprüche 2 bis 6, dadurch gekennzeichnet, daß die Parameter des PI-Reglers (60) durch die Ausgangsgröße des Dreipunktgliedes (61) beeinflußbar sind.

8. Bremsanlage für Kraftfahrzeuge nach Anspruch 1 dadurch gekennzeichnet, daß der Folgeregler (21) aus einer Vorsteuerung (70), einer Gewichtung (72) sowie einem parallel dazu geschalteten PI-Regler (73) besteht, wobei der Vorsteuerung (70) als Eingangsgröße der Soll-Bremsdruckgradient ($\dot{p}_{soll}$) zugeführt wird und ihre Ausgangsgröße der Gewichtung (72) zugeführt wird, während der Endwertregler (22) durch eine Kombination eines nichtlinearen Reglers (71) mit einer Sättigungs-Kennlinie und der Gewichtung (72) mit dem PI-Regler (73) gebildet wird, wobei eine Signalaufbereitung (69) vorgesehen ist, der als Eingangsgröße der Soll-Bremsdruckgradient ($\dot{p}_{soll}$) zugeführt wird und die ein Steuersignal (SW) für die Gewichtung (72) erzeugt, deren Ausgangsgröße einer Kombination der gewichteten Ausgangssignale (Y,X) der Vorsteuerung (70) bzw. des nichtlinearen Reglers (71) entspricht.

9. Bremsanlage für Kraftfahrzeuge nach Anspruch 8, dadurch gekennzeichnet, daß die Ausgangsgröße der Gewichtung (72) nach der Formel

$$X*(1 - SW) + Y*SW$$

gebildet wird.

10. Bremsanlage für Kraftfahrzeuge nach Anspruch 8 oder 9, dadurch gekennzeichnet, daß die Summe der Ausgangsgrößen der Gewichtung (72) und des PI-Reglers (73) einer Beschränkungslogik (75) zugeführt wird, die sie auf einen realisierbaren Wert begrenzt und den I-Anteil des PI-Reglers (73) kontrolliert.

11. Bremsanlage nach einem der Ansprüche 8 bis 10, dadurch gekennzeichnet, daß die Parameter des PI-Reglers (73) durch das Steuersignal (SW) der Signalaufbereitung (69) beeinflußbar sind.

12. Bremsanlage nach einem der vorhergehenden Ansprüche dadurch gekennzeichnet, daß der PI-Regler (60, 73) durch einen P-Regler (78) mit einem vorgeschalteten differenzierenden (DT1-) Filter (77) ergänzbar ist.

## Claims

1. A brake system for motor vehicles, with an activating unit (1) which consists of a pneumatic brake booster (2) as well as a master brake cylinder (3) which is connected downstream of the brake booster and to which wheel brakes (10-13) are connected, wherein the control valve (19) of the brake booster (2) can be triggered, independently of the volition of the driver, by means of an electromagnet (20), the armature (39) of which permits activating one of the control valve sealing seats (28, 41, 43), with a braking pressure control unit (8), to which there is conveyed the standard difference ($\Delta p$) of a signal ($P_{nominal}$) corresponding to the nominal braking pressure and a signal ($P_{actual}$) corresponding to the actual braking pressure, which difference is formed in a first adding device (24) and the output quantity ($S_{sominal}$) of which, that corresponds to a nominal armature travel, is compared, in a second adding device (25), with a signal ($S_{actual}$) which corresponds to the actual armature travel, wherein the standard difference (W) corresponding to the comparison result is conveyed to a position control unit (18) which influences the position of the control valve, the output quantity (Y) of unit (18) corresponding to the electrical current which is to be supplied to the electromagnet (20),
characterized in that the braking pressure control unit (8) is formed by a parallel arrangement of a first control unit (21), which follows the rapid temporal changes of the signal corresponding to the nominal braking pressure ($P_{nominal}$) and of a second control unit (22), which follows the slow changes or the static values of the signal corresponding to the nominal braking pressure ($\dot{p}_{nominal}$), wherein the output quantities ($S_{nominal1}$, $S_{nominal2}$) of both of the control units (21, 22) are supplied to a situational switching logic unit (55) which, depending upon a selection criterion, connects the output quantity of the first (21) or of the second control unit (22) through to the position control unit (18).

2. A brake system for motor vehicles in accordance with claim 1, characterized in that the sequence control unit (21) consists of an anticipatory control branch (56, 57, 58) processing the nominal braking pressure gradient ($\dot{p}_{nominal}$), a non-linear transmission element (64) with a three-point characteristic curve which can be triggered by the output quantity of the switching logic unit (61, 62, 63), as well as a proportional - integrating (PI-) control unit (60), wherein the output quantity ($S_V$) of the anticipatory control branch is added to the output quantity ($S_{VR}$) of the non-linear transmission element (64) and the result of the addition is added to the output quantity ($S_R$) of the PI control unit (60), while the final value control unit (22) is formed with an additional amplification for the standardizing of the standard difference ($\Delta p$), with the non-linear transmission element (64) as well as the PI control unit (60).

3. A brake system for motor vehicles in accordance with claim 2, characterized in that the sum of the output quantities ($S_V$, $S_{VR}$, $S_R$) of the anticipatory control branch (56, 67, 58), the non-linear transmission element (64), and the PI control unit (60) is supplied to a restriction logic unit (66) and controls the I-portion of the PI control unit (60).

4. A brake system for motor vehicles in accordance with claim 2 or 3,
characterized in that the switching logic unit (55, or 61, 62, 63) consists of a three-point element (61) for the recognition of the sign of the nominal braking pressure gradient ($\dot{p}_{nominal}$), of the limiting unit (62), as well as a characteristics diagram (63), the coordinates of which are formed by the output quantities (y, x) of the three-point element (61) as well as of the limiting unit (62), and the non-linear transmission element (64) can be triggered by its output quantity.

5. A brake system for motor vehicles in accordance with claim 4, characterized in that the three-point element (61) has a hysteresis.

6. A brake system for motor vehicles in accordance with one of the claims 2 to 5,
characterized in that the anticipatory control branch (56, 57, 58) consists of a differentiating (DT1-) filter (56), a dead zone (57), as well as an amplifier (58) which is connected downstream of the dead zone (57).

7. A brake system for motor vehicles in accordance with one of the claims 2 to 6,
characterized in that the parameters of the PI control unit (60) can be influenced by the output quantity of the three-point element (61).

8. A brake system for motor vehicles in accordance with claim 1, characterized in that the sequence control unit (21) consists of an anticipatory control unit (70), a weighting unit (72), as well as a PI control unit (73) which is connected in parallel thereto, wherein the nominal braking pressure gradient ($\dot{p}_{nominal}$) is supplied to the anticipatory control unit (70) as an input quantity, and its output quantity is supplied to the weighting unit (72), while the final value control unit (22) is formed by a combination of a non-linear control unit (71) with a saturation characteristic curve and the weighting unit (72) with the PI control unit (73), wherein a signal processing unit (69) is provided, which is supplied as an input quantity with the nominal braking pressure gradient ($\dot{p}_{nominal}$), and which produces a control signal (SW) for the weighting unit (72), the output quantity of which corresponds to a combination of the weighted output signals (Y, X) of the anticipatory control unit (70) or of the non-linear control unit (71).

9. A brake system for motor vehicles in accordance with claim 8, characterized in that the output quantity of the weighting unit (72) is formed in accordance with the formula:

$$X * (1 - SW) + Y*SW.$$

10. A brake system for motor vehicles in accordance with claim 8 or 9,
characterized in that the sum of the output quantities of the weighting unit (72) and the PI control unit (73) is conveyed to a restriction logic unit (75), which limits it to an implementable value and controls the I-portion of the PI control unit (73).

11. A brake system in accordance with one of the claims 8 to 10, characterized in that the parameters of the PI control unit (73) can be influenced by the control signal (SW) of the signal processing unit (69).

12. A brake system in accordance with one of the preceding claims,
characterized in that the PI control unit (60, 73) can be supplemented by a P-control unit (78) preceded by a differentiating (DT1-) filter (77).

## Revendications

1. Système de freinage pour véhicules automobiles, comportant une unité d'actionnement (1) composée d'un amplificateur pneumatique (2) d'effort de freinage ainsi que d'un maître-cylindre de frein (3) installé en aval de celui-ci et sur lequel sont raccordés des freins de roues (10 à 13), la soupape de commande (19) de l'amplificateur d'effort de freinage (2) pouvant être pilotée indépendamment de la volonté du conducteur, par l'intermédiaire d'un électro-aimant (20) dont l'induit (39) peut actionner l'un des sièges d'étanchéité (28, 41, 43) de la soupape de commande, comprenant un régulateur (8) de pression de freinage auquel est acheminé la différence de régulation ($\Delta$p) établie dans un premier additionneur (24) à partir d'un signal ($p_{cons}$)correspondant à une pression de freinage de référence, et d'un signal ($P_{réel}$) correspondant à la pression de freinage réelle, et dont la grandeur de sortie ($S_{cons}$), qui correspond à une course consigne de l'induit, est comparée, dans un deuxième additionneur (25), à un signal ($S_{réel}$) correspondant à une course réelle de l'induit, la différence de régulation (W), qui correspond au résultat de la comparaison, étant acheminée à un asservisseur de position (18) influant sur la position de la soupape de commande, dont la grandeur de sortie (Y) correspond à un courant électrique devant alimenter l'électro-aimant (20), caractérisé en ce que le régulateur de pression de freinage (8) est formé par un branchement en parallèle d'un premier régulateur (21) qui suit les variations rapides dans le temps du signal représentant la pression de freinage de référence ($P_{cons}$), et d'un second régulateur (22) qui suit les variations lentes ou les valeurs statiques du signal représentant la pression de freinage de référence ($\dot{p}_{cons}$), les grandeurs de sortie ($S_{cons1}$, $S_{cons2}$) des deux régulateurs (21, 22) étant acheminées à une logique de commutation (55) liée à la situation, qui, suivant un critère de sélection, retransmet la grandeur de sortie soit du premier (21), soit du second régulateur (22) à l'asservisseur de position (18).

2. Système de freinage pour véhicules automobiles selon la revendication 1, caractérisé en ce que le régulateur en cascade (21) est composé d'une branche de commande primaire (56, 57, 58) traitant le gradient de pression de freinage de référence ($\dot{p}_{cons}$), d'un élément de transmission non-linéaire (64) ayant une courbe caractéristique à trois paliers, pouvant être piloté via la grandeur de sortie de la logique de commutation (61, 62, 63), et d'un régulateur proportionnel-intégral (PI) (60), la grandeur de sortie ($S_V$) de la branche de commande primaire étant ajoutée à la grandeur de sortie ($S_{VR}$) de l'élément de transmission non-linéaire (64), et le résultat de l'addition étant ajouté à la grandeur de sortie ($S_R$) du régulateur PI (60), alors que le régulateur (22) de valeur finale est constitué par une combinaison d'une limitation (62) comportant une amplification supplémentaire destinée à cadrer la différence de régulation ($\Delta$p), et de l'élément de transmission non-linéaire (64), ainsi que du régulateur PI (60).

3. Système de freinage pour véhicules automobiles selon la revendication 2, caractérisé en ce que la somme des grandeurs de sortie ($S_V$, $S_{VR}$, $S_R$) de la branche de commande primaire (56, 57, 58), de l'élément de transmission non-linéaire (64), et du régulateur PI (60), est acheminée à une logique de limitation (66) qui la limite à une valeur réalisable et contrôle la partie I du régulateur PI (60).

4. Système de freinage pour véhicules automobiles selon la revendication 2 ou 3, caractérisé en ce que la logique de commutation (55 ou 61, 62, 63) est composée d'un élément à trois paliers (61) destiné à reconnaître le signe du gradient de pression de freinage de référence ($\dot{p}_{cons}$), de la limitation (62), et d'un réseau de caractéristiques (63), dont les coordonnées sont définies par les grandeurs de sortie (y, x) de l'élément à trois paliers (61), ainsi que de la limitation (62), et en ce que la grandeur de sortie de cette logique permet de piloter l'élément de transmission non-linéaire (64).

5. Système de freinage pour véhicules automobiles selon la revendication 4, caractérisé en ce que l'élément à trois paliers (61) comporte une hystérésis.

6. Système de freinage pour véhicules automobiles selon l'une des revendications 2 à 5, caractérisé en ce que la branche de commande primaire (56, 57, 58) est composée d'un filtre différenciateur (DT1) (56), d'une plage d'insensibilité (57), et d'un amplificateur (58) branché en aval de la plage d'insensibilité (57).

7. Système de freinage pour véhicules automobiles selon l'une des revendications 2 à 6, caractérisé en ce que l'on peut influer sur les paramètres du régulateur PI (60) via la grandeur de sortie de l'élément à trois paliers (61).

8. Système de freinage pour véhicules automobiles selon la revendication 1, caractérisé en ce que le régulateur en cascade (21) se compose d'une commande primaire (70), d'une pondération (72) et d'un régulateur PI (73) branché en parallèle avec celle-ci, la commande primaire (70) recevant, comme grandeur d'entrée, le gradient de pression de freinage de référence ($\dot{p}_{cons}$), et sa grandeur de sortie étant acheminée à une pondération (72), alors que le régulateur de valeur finale (22) est constitué par une combinaison d'un régulateur non-linéaire (71) ayant une courbe caractéristique de saturation, et de la pondération (72), ainsi que du régulateur PI (73), un traitement des signaux (69) étant prévu, qui reçoit, en tant que grandeur d'entrée, le gradient de pression de freinage de référence ($\dot{p}_{cons}$), et qui produit un signal de commande (SW) pour la pondération (72), dont la grandeur de sortie correspond à une combinaison des signaux de sortie pondérés (Y, X) de la commande primaire (70) et du régulateur non-linéaire (71).

9. Système de freinage pour véhicules automobiles selon la revendication 8, caractérisé en ce que la grandeur de sortie de la pondération (72) est calculée selon la formule

$$X \cdot (1 - SW) + Y \cdot SW.$$

10. Système de freinage pour véhicules automobiles selon la revendication 8 ou 9, caractérisé en ce que la somme des grandeurs de sortie de la pondération (72) et du régulateur PI (73) est acheminée à une logique de limitation (75), qui la limite à une valeur réalisable et contrôle la partie I du régulateur PI (73).

11. Système de freinage selon l'une des revendications 8 à 10, caractérisé en ce que l'on peut influencer les paramètres du régulateur PI (73) à travers le signal de commande (SW) du traitement des signaux (69).

12. Système de freinage selon l'une des revendications précédentes, caractérisé en ce que le régulateur PI (60, 73) peut être complété d'un régulateur P (78) muni d'un filtre différenciateur (DT1) (77) branché en amont de celui-ci.

# Fig. 1

Fig. 2

# Fig. 3

# Fig. 4

EP 0 814 982 B1

Fig. 5

EP 0 814 982 B1